# EUROPEAN PATENT SPECIFICATION

(11) **EP 0 422 658 B1**
(45) Date of publication and mention of the grant of the patent: **08.02.1995**
(21) Application number: 90119530.5
(22) Date of filing: 11.10.1990
(51) Int. Cl.: G11B 23/087

(54) **Magnetic tape cassette**
Magnetbandkassette
Cassette à bande magnétique

(30) Priority: 12.10.1989 JP 118750/89 U
(43) Date of publication of application: 17.04.1991
(73) Proprietor: FUJI PHOTO FILM CO., LTD., Kanagawa (JP)
(72) Inventor: Katagiri, Shingo, 2-chome, Osawara-shi, Kanagawa (JP); Suzuki, Osamu, 2-chome, Osawara-shi, Kanagawa (JP)
(74) Representative: Grünecker, Kinkeldey, Stockmair & Schwanhäusser Anwaltssozietät

(56) References cited:
- GB-A- 2 205 304

## Description

### MAGNETIC TAPE CASSETTE

### BACKGROUND OF THE INVENTION

The present invention relates to magnetic tape cassettes, and more particularly to an improvement of a deformation preventing structure of upper and lower halves which form a magnetic tape cassette.

Magnetic tape cassettes are employed as recording and reproducing media in audio devices such as magnetic tape recorders and in video devices such as VTRs. An ordinary audio magnetic tape cassette will be described with reference to Fig. 5.

As shown in Fig. 5, the conventional magnetic tape cassette 1 includes upper and lower halves 1a and 1b, a pair of hubs 3a and 3b rotatably mounted in a case body formed by combining the upper and lower halves 1a and 1b, and a magnetic tape 2 wound on the hubs 3a and 3b. The upper and lower halves 1a and 1b are formed by injection molding. The upper and lower halves thus formed are combined together with screws 4 to form the case body with a tight joint 5.

Since magnetic tape cassettes are handy to carry, they are utilized in various placed, not only indoors but also outdoors and even inside vehicles. That is, magnetic tape cassettes are used in various environmental conditions: they may be used at high temperatures as in the inside of a vehicle in summer, or at low temperature, and they may be used in dusty places.

The upper and lower halves 1a and 1b of the cassette are made of synthetic resin. Therefore, when the environmental condition of the cassette changes, then part of the upper and lower halves may be deformed. This deformation is more likely to occur with the rear end portion 7 of the cassette rather than with the front end portion where an opening 4 is formed to meet the magnetic head.

It is considered that this difficulty is caused by the fact that, in molding, an injection gate is provided near the opening 6 to form the front end portion including the opening 6 with high accuracy, as a result of which the injecting pressure is decreased at the rear end portion 7, thus deforming the latter. On the other hand, recently there have been available cassette cases formed by so-called "two-color molding" in compliance with a demand in design. The cassette cases formed by "two-color molding" are more susceptible to deformation than cassette cases formed by the above "single-color molding".

For the rear end portion 7 of the cassette, screws 4 are provided only at two corners. That is, of the peripheral parts of the cassette which are not directly affected by the screw tightening force, the part occupied by the rear end portion is the longest. Hence, the rear end portion 7 of the cassette is liable to be deformed in such a manner as to open the joint of the upper and lower halves.

When the joint 5 is opened by the deformation of the rear end portion 7 of the cassette, dust is liable enter the cassette. If dust sticks to the magnetic tape in the cassette, signal drop-out occurs; that is, the signal recording and reproducing operation is adversely affected.

The above-described deformation of the cassette may be eliminated by increasing the number of screw-tightened positions in the rear end portions. However, such an approach is not preferable because the number of components and the number of manufacturing steps are increased.

GB-A- 2 205 304 discloses a tape cassette with a laminated layer formed on the top wall of the upper cassette halve in order to provide a window for viewing the tape reels. This document does not suggest to use layers of different thermal coefficients of contraction as is done by the present invention.

### SUMMARY OF THE INVENTION

Accordingly, an object of this invention is to eliminate the above-described difficulties accompanying a conventional magnetic tape cassette. More specifically, an object of the invention is to provide a magnetic tape cassette which is prevented from unintentional deformation.

The foregoing object of the invention has been achieved by the provision of a magnetic tape cassette comprising: a pair of hubs rotatably supported in a cassette case formed by upper and lower halves, and a magnetic tape wound on the hubs in such a manner that the magnetic tape is run freely, in which, according to the invention, in each of the upper and lower halves, at least the rear end portion thereof has a laminated structure fabricated by forming layers of synthetic resins differing in coefficient of thermal contraction one on another in the direction of thickness of the cassette in such a manner that the coefficient of thermal contraction of the outermost layer of synthetic resin is the largest.

In the above magnetic tape cassette in which the laminated structure is such that the coefficient of thermal contraction of the outer synthetic resin layer is larger than that of the inner synthetic resin layer, the peripheral portions of the upper and lower halves are allowed to curve inwardly, or towards each other after molding. Hence, when the upper and lower halves are joined together with tightening screws, the parts of the peripheral portions of the upper and lower halves are pressed into abutment against each other due to the inward curvature of the peripheral portions. This suppresses the force of deformation which is produced when the ambient temperature changes, and thus prevents deformation of the whole cassette.

Since the cassette is prevented from deformation as described above, substantially no gap is formed at the juncture of the upper and lower halves, and accordingly the entrance of dust into the cassette is prevented, thus improving the reliability of the cassette.

### BRIEF DESCRIPTION OF THE DRAWINGS

Fig. 1 is a perspective view of an example of a magnetic tape cassette constructed according to the invention;
Fig. 2 is a sectional view, partly as an enlarged view, showing essential parts of the magnetic tape cassette according to the invention;
Fig. 3 and 4 are sectional views of a metal mold for forming an upper half of the cassette by two-color molding; and
Fig. 5 is a perspective view showing an example of a conventional magnetic tape cassette.

### DESCRIPTION OF THE PREFERRED EMBODIMENTS

An example of a magnetic tape cassette constructed according to the invention will be described with reference to the accompanying drawings.

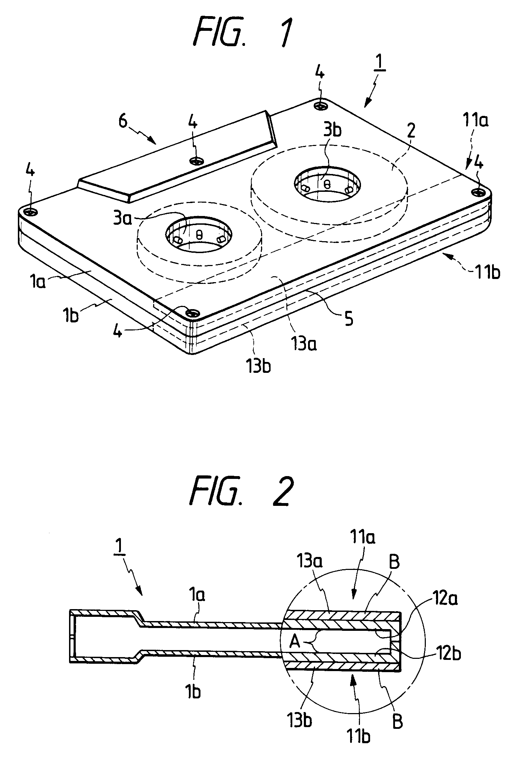

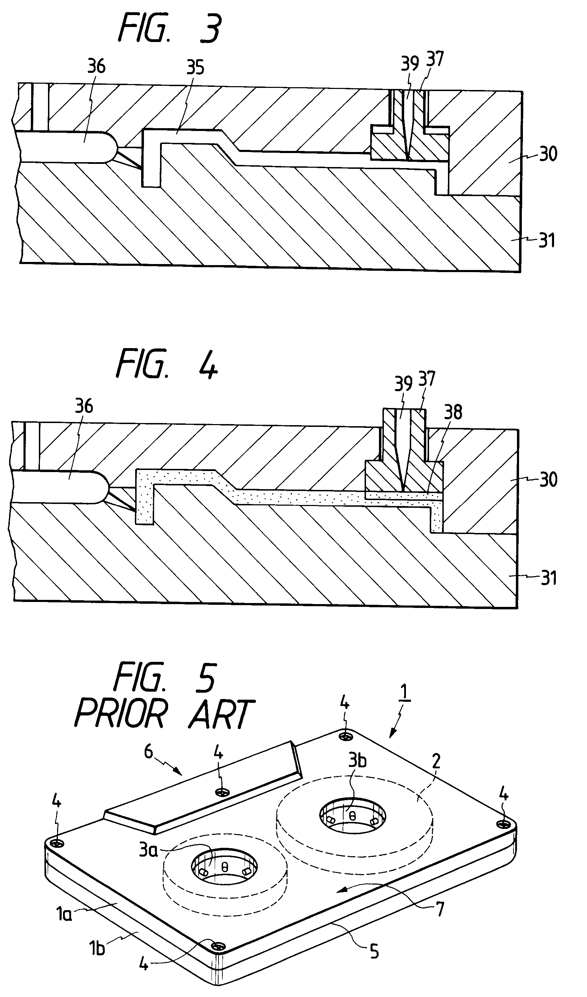

Fig. 1 is a perspective view of the magnetic tape cassette according to the invention. Fig. 2 is a sectional view taken along the front-to-rear line of the cassette shown in Fig. 2. Figs. 3 and 4 are sectional views showing essential parts of a two-color molding metal mold. In these figures, parts which have been previously described with reference to Fig. 5 are therefore designated by the same reference numerals or characters.

First, the laminated structure of the upper and lower halves of the cassette will be described with Figs. 1 and 2.

In the magnetic tape cassette 1 according to the invention, the rear end portion 11a of the upper half 1a and the rear end portion 11b of the lower half 1b has the aforementioned laminated structure, as shown in Fig. 2. According to the technical concept of the invention, the laminated structre may be applied to all the parts of the upper and lower halves 1a and 1b, or to the periphery of the cassette, or to a desired part or parts of the cassette. However, since the rear end portion of the cassette is liable to be deformed as was described above, in this example of the cassette the laminated structure is applied to the rear end portion. However, it goes without saying that application of the laminated structure is not limited to the illustrated regions of the rear end portions 11a and 11b of the upper and lower halves 1a and 1b, and the laminated structure may be applied to larger or smaller regions.

As shown in the enlarged part of Fig. 2, the rear end portion 11a is formed by an inner plate 12a made of the same synthetic resin A as substantially the whole upper half 1a, and an outer plate 13a made of a synthetic resin B different from the aforementioned synthetic resin A in thermal contraction coefficient. Similarly, the rear end portion 11b is formed by an inner plate 12b made of the same synthetic resin A as substantially the whole lower half 1b, and an outer plate 13b made of the synthetic resin B.

In lamination of these plates, it is preferable that the coefficient of the synthetic resin B be larger than that of the synthetic resin A. In the magnetic tape cassette of the invention, the peripheral portions of the upper and lower halves 1a and 1b are fixedly joined by tightening the screws 4. Therefore, when the coefficient of contraction of the synthetic resin B is larger, after molding the parts of the rear end portions except the screw-tightened parts, the middle parts of the rear end portions are curved towards each other. When, under this condition, the rear end portions are joined by tightening the screws, the middle portions are relatively strongly abutted against each other. Hence, when environmental conditions change to deform the cassette at the rear end, the rear end portion of the cassette overcomes the force of deformation. As a result, the middle portions of the rear end portions of the upper and lower halves are not spaced away from each other; that is, no gap is formed between the two halves of the cassette.

If the coefficient of contraction of the synthetic resin B is smaller than or equal to that of the synthetic resin A, the middle portions of the rear end portions of the upper and lower are liable to be spaced away from each other, thus opening the joint. The synthetic resin A may be ABS resin, AS resin, or PS resin. Resin larger than the synthetic resin A in the coefficient of contraction may be employed as the synthetic resin B.

Formation of the laminated structure will be described with reference to the upper half 1a.

Figs. 3 and 4 shows a slide core type metal mold according to the two-color molding method in the art. First, formation of the upper half 1a will be described.

As shown in Fig. 3, a cavity 35, formed by the upper and lower parts 30 and 31 of the metal mold, is used to form the upper half 1a. A submarine gate 36 for injecting the synthetic resin A is formed near the cavity 35 in such a manner that the gate 36 is communicated with the cavity 35. The submarine gate 36 is used to inject the synthetic resin A into the mold in the front-to-rear direction of the cassette.

In the rear end portion of the cavity 35 where the layer of synthetic resin B is formed, a slide core is provided in so that the thickness of the cavity is decreased. Hence, when the upper half 1a is formed by injecting the synthetic resin A, it has a step in the rear end portion.

After the upper half 1a has been formed in the metal mold cavity 35, the slide core 37 is moved upwardly as shown in Fig. 4 to form a cavity 38 on the rear end portion at the step into which the synthetic resin B is injected to form the layer of synthetic resin B. That is, the cavity 38 is provided for the formation of the upper half in a second molding step. Under this condition, the synthetic resin B is injected into the cavity 3 through the direct gate 39 formed in the slide core 37, so that the layer of synthetic resin B is formed on the layer of synthetic resin A. This, the formation of the upper half 1a has been accomplished.

Similarly as in the case of the upper half 1a, the lower half 1b is formed. The upper and lower halves 1a and 1b are jointed to form the cassette case.

While only one embodiment of the invention has been described, it should be noted that the invention is not limited thereto or thereby. That is, the embodiment may be changed or modified in various manners without departing from the invention as defined in the appended claims.

For instance, in one modification, a transparent synthetic resin may be employed as the synthetic resin A, and a colored resin used as the synthetic resin B.

In another modification, with an opaque synthetic resin as the synthetic resin A, laminated structure is formed at the rear end portion, and a transparent window for observing the magnetic tape is formed using two-color molding. This modification allows variation in the design of the cassette case, providing the same effect in mechanical strength.

As described above, in the magnetic tape cassette according to the invention, the whole or part of the upper and lower halves forming the cassette case is provided with a laminated structure formed by placing layers of synthetic resins different in the coefficient of thermal contraction one on another in such a manner that the outermost layer of synthetic resin is the largest in the coefficient of thermal contraction. Therefore, in the upper and lower halves, the parts of the periphery of the cassette other than the screw-tightened parts are curved or allowed to curve towards each other, being contracted after molding. Under this condition, the upper and lower halves are joined together with the screws, so that the parts not screw-tightened are abutted against each other or tend to abut against each other. Hence, even when environmental conditions change to deform the cassette, the cassette overcomes the force of deformation. As a result, of the peripheries of the upper and lower halves, the middle parts located between the tightening screws are not spaced apart from each other. That is, no gap is formed at the joint, and deformation of the upper and lower halves can be prevented. Accordingly, the entrance of dust into the cassette through the joint is prevented, which contributes to improvement of the reliability of the cassette.

## Claims

1. A magnetic tape cassette comprising a pair of hubs (3a,3b) rotatably supported in a cassette case formed by upper and lower halves (1a,1b), a magnetic tape (2) wound on said hubs (3a,3b) in such a manner that said magnetic tape (2) is run freely, and means for sealing at least a rear end portion of said cassette case, each of said upper and lower halves (1a,1b) being
**characterized in that**
at least the rear end portion (11a,11b) of said halves has a laminated structure constructed by forming in the direction of thickness of said cassette a first outer layer (13a,13b) and a second inner layer (12a,12b) of synthetic resin differing in coefficients of thermal expansion in such a manner that the coefficient of said first layer of synthetic resin is larger than that of said second layer.

2. The magnetic tape cassette of claim 1, wherein said laminated structure consists of an inner layer and an outer layer, said inner layer being integral with and being formed of the same resin material as other portions of said cassette.

3. The magnetic tape cassette of claim 2, wherein said inner layer and said other portions of said cassette are formed of a transparent synthetic resin and said outer layer is formed of a colored resin.

4. The magnetic tape cassette of claim 2, wherein said inner layer and said other portions of said cassette are formed of an opaque synthetic resin and said outer layer is formed of a colored resin.

5. A method for forming a magnetic tape cassette, comprising the steps of: forming two halves (1a,1b) of said cassette by the steps of: providing a first molding cavity (35) for molding portions of said cassette half other than at least a rear end portion (11a,11b) in the direction of thickness of said cassette filled by a slide core (37); injecting a first synthetic resin (A) into said first molding cavity (35); and moving said slide core (37) to form a second molding cavity (38) defining said at least rear end portion (11a,11b); and joining said two halves with screws (4),
**characterized in that**
said halves forming steps further comprises a step of injecting a second synthetic resin (B) into said second molding cavity (38), said second synthetic resin (B) having a coefficient of thermal contraction greater than that of said first synthetic resin (A).

6. The method for forming a magnetic tape cassette of claim 5, wherein said first synthetic resin is injected in a front-to-rear direction of said cassette.

7. The method for forming a magnetic tape cassette of claim 5, wherein said first synthetic resin is injected through a submarine gate and said second synthetic resin is injected through a direct gate.

## Patentansprüche

1. Magnetbandkassette, die aufweist:
ein Paar Naben (3a, 3b), die drehbar in einem Kassettengehäuse gelagert sind, das aus Ober- und Unterhälfte (1a, 1b) gebildet ist, ein Magnetband (2), das auf den Naben (3a, 3b) derart aufgewickelt ist, daß das Magnetband (2) frei läuft, und eine Einrichtung, die zumindest den hinteren Abschnitt des Kassettengehäuses verschließt, **dadurch gekennzeichnet**, daß die Hälften (1a, 1b) jeweilig zumindest an ihren hinteren Endabschnitten (11a, 11b) eine geschichtete Struktur aufweisen, die mit einer in Dickenrichtung der Kassette ausgebildeten ersten äußeren Schicht (13a, 13b) und einer zweiten inneren Schicht (12a, 12b) aus Kunststoff mit verschiedenen Temperaturausdehnungskoeffizienten derart aufgebaut ist, daß der Koeffizient der ersten Kunststoffschicht größer ist als der der zweiten Schicht.

2. Magnetbandkassette nach Anspruch 1, **dadurch gekennzeichnet**, daß die geschichtete Struktur aus einer inneren Schicht und einer äußeren Schicht besteht, wobei die innere Schicht einstückig mit anderen Abschnitten aus dem gleichen Kunststoffmaterial wie andere Abschnitte der Kassette ausgebildet ist.

3. Magnetbandkassette nach Anspruch 2, **dadurch gekennzeichnet**, daß die innere Schicht und die anderen Abschnitte der Kassette aus transparentem und die äußere Schicht aus farbigem Kunststoff ausgebildet sind.

4. Magnetbandkassette nach Anspruch 2, **dadurch gekennzeichnet**, daß die innere Schicht und die anderen Abschnitte der Kassette aus opakem Kunststoff und die äußere Schicht aus farbigem Kunststoff ausgebildet sind.

5. Verfahren zur Herstellung einer Magnetbandkassette, das zur Bildung zweier Hälften (1a, 1b) der Kassette die Schritte aufweist:
Bereitstellung eines ersten Gußhohlraumes (35) zum Gießen anderer Abschnitte der Kassette als zumindest eines hinteren Endabschnittes (11a, 11b), wobei der Gußhohlraum in Dickenrichtung der Kassette mit einem Gleitkern (37) gefüllt ist;
Einspritzen eines ersten Kunststoffes (A) in den ersten Gußhohlraum (35);
Bewegen des Gleitkernes (37), um einen zweiten Gußhohlraum zur Festlegung des zumindest hinteren Endabschnittes (11a, 11b) zu schaffen; und
Verbinden der beiden Hälften mit Schrauben (4),
**dadurch gekennzeichnet**,
daß die Schritte zur Herstellung der Hälften weiter einen Schritt aufweisen zum
Einspritzen eines zweiten Kunststoffes (1B) in den zweiten Gußhohlraum (38), wobei der zweite Kunststoff (B) einen Temperaturkontraktionskoeffizienten aufweist, der größer ist als der des ersten Kunststoffes (A).

6. Verfahren zur Herstellung einer Magnetbandkassette nach Anspruch 5, **dadurch gekennzeichnet**, daß der erste Kunststoff in einer Richtung von vorne nach hinten in die Kassette eingespritzt wird.

7. Verfahren zur Herstellung einer Magnetbandkassette nach Anspruch 5, **dadurch gekennzeichnet**, daß der erste Kunststoff durch einen Eingußkanal unterhalb der Teilungsebene und der zweite Kunststoff durch einen direkten Anguß eingespritzt wird.

## Revendications

1. Cassette à bande magnétique comportant une paire de moyeux (3a, 3b) supportés de façon rotative dans un boîtier de cassette formé par des moitiés supérieure et inférieure (1a, 1b), une bande magnétique (2) enroulée sur lesdits moyeux (3a, 3b) d'une manière telle que ladite bande magnétique (2) défile librement, et des moyens destinés à obturer au moins une partie d'extrémité arrière dudit boîtier de cassette, chacune desdites moitiés supérieure et inférieure (1a, 1b) étant
caractérisée en ce que
au moins la partie d'extrémité arrière (11a, 11b) desdites moitiés a une structure stratifiée fabriquée en formant dans le sens de l'épaisseur de ladite cassette une première couche extérieure (13a, 13b) et une deuxième couche extérieure (12a, 12b) de résines synthétiques de coefficients de dilatation thermique différents d'une manière telle que le coefficient de ladite première couche de résine synthétique est plus grand que celui de ladite deuxième couche.

2. Cassette à bande magnétique selon la revendication 1, dans laquelle ladite structure stratifiée se compose d'une couche intérieure et d'une couche extérieure, ladite couche intérieure étant d'un seul tenant avec et étant formée dans la même matière résineuse que les autres parties de ladite cassette.

3. Cassette à bande magnétique selon la revendication 2, dans laquelle ladite couche intérieure et lesdites autres parties de ladite cassette sont formées dans une résine synthétique transparente et ladite couche extérieure est formée dans une résine colorée.

4. Cassette à bande magnétique selon la revendication 2, dans laquelle ladite couche intérieure et lesdites autres parties de ladite cassette sont formées dans une résine synthétique opaque et ladite couche extérieure est formée dans une résine colorée.

5. Procédé de fabrication d'une cassette à bande magnétique, comportant les étapes consistant à :former deux moitiés (1a, 1b) de ladite cassette avec les étapes consistant à : prévoir une première cavité de moulage (35) destinée à mouler des parties de ladite moitié de cassette autres qu'au moins une partie d'extrémité arrière (11a, 11b) dans le sens de l'épaisseur de ladite cassette, remplie par un noyau coulissant (37); injecter une première résine synthétique (A) dans ladite première cavité de moulage (35); et déplacer ledit noyau coulissant (37) afin de former une cavité (38) définissant ladite partie d'extrémité arrière (11a, 11b); et raccorder lesdites deux moitiés avec des vis (4),
caractérisé en ce que
lesdites étapes de fabrication de moitiés comportent en outre une étape d'injection d'une deuxième résine synthétique (B) dans ladite deuxième cavité de moulage (38), ladite deuxième résine synthétique (B) ayant un coefficient de contraction thermique supérieur à celui de ladite première résine synthétique (A).

6. Procédé de fabrication d'une cassette à bande magnétique selon la revendication 5, dans lequel ladite première résine synthétique est injectée dans une direction d'avant en arrière de ladite cassette.

7. Procédé de fabrication d'une cassette à bande magnétique selon la revendication 5, dans lequel ladite première résine synthétique est injectée par l'intermédiaire d'une attaque basse et ladite deuxième résine synthétique est injectée par l'intermédiaire d'une attaque directe.
